# EUROPEAN PATENT APPLICATION

(11) **EP 3 910 898 A1**
(43) Date of publication of application: **17.11.2021**
(21) Application number: 20020217.4
(22) Date of filing: 13.05.2020
(51) Int. Cl.: H04L 29/06, H04W 8/18, H04W 8/20, H04W 12/00, H04W 4/50

(54) **ESIM PROFILE POLICY MANAGEMENT**

(71) Applicant: Giesecke+Devrient Mobile Security GmbH, 81677 München (DE)
(72) Inventor: Larsson, Thomas, 125 56 Älvsjö (SE)
(74) Representative: Giesecke + Devrient IP

(57) **Abstract**

The mobile station comprises a terminal and a secure element (for example a UICC or a eUICC) hosted in the terminal. At least one profile, or several profiles, is/are implemented in the secure element. The or each profile is implemented to authenticate the mobile station versus a mobile radio network, and can for example be a profile essentially according to [1] SGP.22. The profile contains at least one profile policy identifier, PPRID, by which a profile policy is set. A SE policy management app, SEP App, implemented in the Secure Element, and a terminal device policy management app, TP App, implemented in the terminal interoperate such that a user of the mobile station can enter, via a user interface of the terminal, profile policy change instructions, which are received by the TP App, and trigger that the TP App sends to the SEP App a corresponding profile policy change command. The SEP App receives the profile policy change command sent by the TP App and changes a profile policy identifier, PPRID, according to the received policy change command (CC), so as to change the profile policy accordingly.

## Description

### Field of the invention

The present invention relates to a mobile station comprising a terminal and a secure element (UICC, eUICC) hosted in the terminal, with at least one profile implemented in the secure element, the profile implemented to authenticate the mobile station versus a mobile radio network, and the profile containing at least one profile policy identifier, PPRID, by which a profile policy is set.

### Background of the invention

A mobile station for communicating in a mobile radio network comprises a mobile terminal and a Secure Element. The mobile terminal - or briefly only terminal - serves as physical interface to the user and to the mobile radio network. The secure element contains one or more profiles for authentication of the mobile station versus the mobile radio network. Secure elements are known in different form factors, particularly as plug-in SIM card or UICC, as soldered-in embedded secure element, eUICC, or as integrated secure element, iUICC, integrated into a chip of a chipset of the terminal. Terminals are known to have a form factor or a Smartphone, Tablet Computer, M2M module, Automotive module, IoT module, or the like. The term "mobile" relates to the feature of the mobile station or mobile terminal to have the ability to communicate over a mobile radio network (in contrary to devices having only wire-bound communication abilities), whereas physical mobility of the hardware of the terminal is not required, and is not the crucial feature.

Profiles of traditional plug-in UICCs are fixedly pre-programmed into the secure element. However, profiles can be provided to a secure element by remote provisioning of the profiles from a provisioning server to the Secure Element. The document [1] SGP.22, GSMA RSP Technical Specification, Version 2.2.1, 18 December 2018, describes details of such remote profile provisioning. In [1] SGP.22 the secure element is named eUICC, and the provisioning server is named SM-DP+.

### Prior Art

The document [1] SGP.22, GSMA RSP Technical Specification, Version 2.2.1, 18 December 2018, section 2.9.1 "Profile policy rules" (page 43), discloses two profile policy rules, namely PPR1 'Disabling of this Profile is not allowed', and PPR2 'Deletion of this Profile is not allowed'. PPR1 'Disabling of this Profile is not allowed' is designed to lock the device to one particular mobile network operator MNO, by preventing the user from disabling the profile in favour of a different profile associated with a different MNO. Any profile policy rule set in profile in a Secure Element (in SGP.22: eUICC) according to [1] SGP.22 is coded in a Profile Policy Rule identifier, Pprld, as specified in [1] SGP.22, section 2.8.1.1 "Data type: PprIds". [1] SGPP.22, section 2.8.1.1 Data type: Pprlds: allows that "Further versions of this specification MAY introduce new Profile Policy Rule identifiers".

The profile policy rules of a particular profile are set by the provisioning server, in case of SGP.22, the SM-DP+, in that a corresponding profile policy identifier is coded into the particular profile.

Presently, a user cannot locally change the set profile policy rules of a profile implemented in a secure element, so as to disable or delete profiles implemented in the Secure Element, for which the profile policy rules prevents disabling / deletion.

However, profile policy rules can be overruled by the provisioning server, in case of SGP.22 the SM-DP+, by resetting the memory of the secure element, with the option to delete only some selected profiles of all profiles present on the secure element. Document [1] SGP.22, section 5.7.19 titled "Function (ES10c): eUICC Memory Reset" discloses: "This function deletes selected subsets of the Profiles stored on an eUICC regardless of their enabled status or any Profile Policy Rules." Herein, communication between the provisioning server / SM-DP+ and the secure element / eUICC are protected by PKI - public key infrastructure.

Trusted Execution Environment, abbreviated TEE, and also named Trustzone, is a concept of securing an execution environment platform of a chip or chipset without having a dedicated separated hardware security module, like a plug-in SIM card, or a soldered-in eUICC. Some mobile terminals of the Original Equipment Manufacturer (OEM) Samsung include a Trusted Execution Environment TEE or Trustzone known under the protected name "Knox" in the chipset of the mobile terminal.

### Objective of the invention

It is an object of the present invention to provide a solution that enables a user of a mobile station, including a terminal and a secure element including at least one profile with set profile policy rules, to change the set profile policy rules without requiring connectivity in the mobile radio network, particularly without requiring connectivity of the mobile station to a provisioning server or other servers over the mobile radio network.

### Summary of the invention

The object of the invention is achieved by a mobile station with the following features, according to claim 1. Embodiments of the invention are presented in dependent claims.

The presented mobile station comprises a terminal and a secure element (for example a UICC or a eUICC) hosted in the terminal. At least one profile, or several profiles, is/are implemented in the secure element. The or each profile is implemented to authenticate the mobile station versus a mobile radio network, and can for example be a profile essentially according to [1] SGP.22. The profile contains at least one profile policy identifier, PPRID, by which a profile policy is set. A SE policy management app, SEP App, implemented in the Secure Element, and a terminal device policy management app, TP App, implemented in the terminal interoperate such that a user of the mobile station can enter, via a user interface of the terminal, profile policy change instructions, which are received by the TP App, and trigger that the TP App sends to the SEP App a corresponding profile policy change command. The SEP App receives the profile policy change command sent by the TP App and changes a profile policy identifier, PPRID, according to the received policy change command (CC), so as to change the profile policy accordingly.

For changing a profile policy, no connectivity to a mobile network or other network is required. Instead, via the interoperating Apps in the secure element and in the terminal, namely the SEP App and the TP App, the user can perform the profile policy change locally at her/his mobile station.

For example, in a secure element containing a profile policy identifier, PPRID, having value PPR1 'Disabling of this Profile is not allowed', preventing local disabling of profiles, it is possible that a user locally enters an instruction to change the current PPRID value from above PPR1 to PPR2 'Deletion of this Profile is not allowed'. The effect is that the TP App in the terminal sends to the SEP App in the secure element a profile policy change command to change the PPRID from the current value PPR1 'Disabling of this Profile is not allowed' to the new value PPR2 'Deletion of this Profile is not allowed'. The effect of this change in PPRID value in the secure element is that the user can from now on locally disable profiles, which was not possible before. Deletion of profiles, on the other hand is not possible locally. Currently SGP.22 provides no further PPRID values, however leaves open that in the future further PPRID values will be available. The present invention applies also to other PPRID values than the two currently available ones PPR1 and PPR2.

The terminal of the mobile station can for example be a mobile phone or smartphone or tablet PC or similar mobile connectivity device. The user interface can be for example the touch screen or keyset or voice interface or the like of a mobile phone or smartphone or tablet PC or other mobile connectivity device.

According to some embodiments of the invention, profile policy change commands are sent via a secure communication channel established between the terminal and the secure element, so as to ensure integrity of the profile policy change commands, and prevent unauthorized manipulation of the same. Such a secure channel allows enforcement of conditions that have to be fulfilled so that a set profile policy is allowed to be changed.

According to some embodiments of the invention, the secure communication channel is established by public key infrastructure, PKI, authentication and encryption of profile policy change commands before or upon sending said commands.

According to some embodiments of the invention, the public key infrastructure, PKI, comprises: a TP App private key and a corresponding TP App public key, and a SEP App private key and a corresponding SEP App public key.

In the PKI infrastructure, in some embodiments, the TP App private key comprises a random key portion and a terminal specific key portion, wherein the terminal specific key portion comprises one or several of the following elements: a device identifier EID of the terminal, an International Mobile Equipment Identity IMEI of the terminal. According to this embodiment, applying the TP App private key achieves encryption or decryption of data, and at the same time a watermarking of the data.

According to some embodiments of the invention implying a secure communication channel between the terminal and the secure element, the terminal comprises a chipset, and wherein the terminal is implemented with a trusted execution environment, TEE, in the chipset of the terminal, and wherein the terminal device policy management app, TP App, - or at least a security relevant portion of the TP App - is implemented in the trusted execution environment, TEE, of the terminal, and wherein the secure communication channel is established between the trusted execution environment, TEE, and the secure element. According to the here described embodiments, an end-to-end secured channel between two secure environments, the TEE and the secure element, is achieved.

According to some embodiments of the invention, the terminal further comprises a terminal management client, allowing amendments to the TP App or/and to the SEP App via amendment commands received at the terminal or at the secure element via the mobile radio network. The amendment commands can be for example OTA (over-the-air) commands. For example, the terminal management client can receive the amendment commands, particularly OTA commands, from a provisioning server, such as a SGP.22 SM-DP+ server, or from an MNO server.

According to some embodiments of the invention, the above described terminal management client is implemented in the trusted execution environment, TEE.

According to some embodiments of the invention, the terminal and the secure element are further implemented with a terminal profile policy certificate infrastructure. Herein, with a profile change command sent for the TP App to the SEP App, a profile policy certificate is sent from the TP App to the SEP APP and verified in the SEP APP. In this case, the step in the secure element of changing the profile policy identifier, PPRID, according to the received policy change command, so as to change the profile policy accordingly, is executed upon successful verification of the certificate, and not executed upon failed verification of the certificate.

The above certificate can for example be provided to a terminal after an authentication procedure. A terminal containing the certificate can be used to locally change profile policy identifiers, and thus the profile policy rules to be applied.

The profile policy change command is for example a SIM Toolkit Command STK.

The profile policy change command or/and the profile policy change instruction can be parametrized with following parameters: a profile identifier of a profile for which the profile policy change command or/and the profile policy change instruction is intended; at least one profile policy identifier, PPRID, related for said profile.

In some embodiments of parameters, as a parameter, only one profile policy identifier, PPRID, is provided with the profile policy change command. In this case the command can for example be "delete" or "implement" this PPRID, with the parameter being set to the value of the concerned PPRID. Exemplary structures of a parametrized commands are: < IMPLEMENT [P1; PPRID1]> with effect that profile P1 further on comprises a profile policy identifier PPRID1; < DELETE [P2; PPRID1]> with effect that a profile policy PPRID1, previously implemented in profile P2, is further on not implemented to profile P2.

In some embodiments of parameters, the command can be "change", and comprise, in addition to a profile identifier, a first profile policy identifier, PPRID, designating a profile policy identifier, PPRID to be removed from the profile and a second profile policy identifier, PPRID to be implemented to the profile. In this type of parametrization, the profile policy change command can be generic ("change"), and the location of the profile policy PPRID in the command parameters indicates if the PPRID is to be removed or to be implemented. For example Change-Profile-Identifier [P2, PPRID3, PPRID4] can indicate that the concerned profile is profile P2 (location #1 in the command), a profile policy PPRID to be deleted/removed is PPRID3 (for example SGP.22 PPR1) (location #2 in the command), and a profile policy PPRID to be implemented is PPRID4 (for example SGP.22 PPR2). An exemplary command for changing in profile P2 a profile policy identifier from PPRID3 to PPRID4 could be <CHANGE [P2; PPRID3; PPRID4]>.

The profile policy identifiers of a particular profile can implemented within this particular profile. Alternatively, some or all profile policy identifiers can be implemented in a storage place separate from a particular profile, for example within or related to the SEP App.

### Brief description of the drawings

Embodiments of the invention will now be described with reference to the accompanying drawings, throughout which like parts are referred to by like references, and in which represent:
- Fig. 1: a mobile station 10 comprising a terminal 20 and a secure element 30, according to an embodiment of the invention;
- Fig. 2: an enlarged view of the terminal 20 and secure element 30 of the mobile station 10 of Fig. 1, with one exemplary setup of SEP App, TP App, profiles and profile policy identifiers;
- Fig. 3: a diagram depicting operation of the mobile station 10 of Fig. 2 when managing profile policy change instructions CI and change commands CC.

### Detailed description of the invention

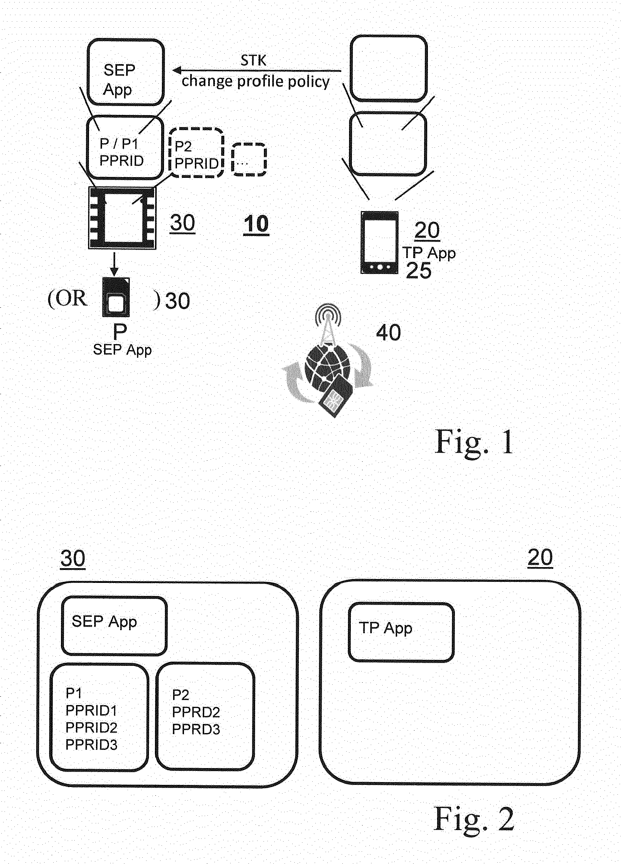

Fig. 1 shows a mobile station 10 comprising a terminal 20 and a secure element 30 (UICC, eUICC) hosted in the terminal. There is at least one profile P implemented in the secure element 30, or several profiles P1, P2, .... The profile P (or each profile P1, P2, ...) is implemented to authenticate the mobile station 10 versus a mobile radio network 40 (which can be the same network or different networks for different profiles P1, P2, ...). The (each) profile P (P1, P2, ...) contains at least one profile policy identifier, PPRID, by which a profile policy is set. Further, there is an SE policy management app, SEP App, implemented in the Secure Element 30. In the terminal 20, a terminal device policy management app, TP App, is implemented. The TP App in the terminal 20 can be either dedicated to all profiles in the secure element 30, or can have a hierarchical substructure, so as to have partial TP Apps each dedicated to one or several dedicated profiles (shown by a box in dotted line). The terminal in Fig. 1 is shown to be a Smartphone, as an example of a terminal 20.

Fig. 2 shows an enlarged view of the terminal 20 and secure element 30 of the mobile station 10 of Fig. 1, with one exemplary setup of SEP App, TP App, profiles P1, P2 and profile policy identifiers . The secure element 30 comprises two profiles P1 and P2 and an SEP App. Within a first profile P1 of the two profiles, three profile policy identifiers PPRID1, PPRID2, PPRID3 are implemented. Within a second profile P2 of the two profiles, two profile policy identifiers PPRID2, PPRID3 are implemented. For example, the value PPRID1 can stand for "deactivation of profile not allowed", the value PPRID2 can stand for "deletion of profile not allowed", the value PPRID3 can stand for "use of profile outside home country not allowed", or the like. The terminal 20 comprises a TP App.

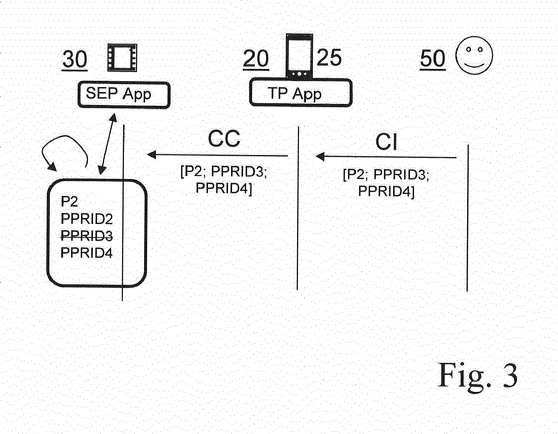

Fig. 3 shows a diagram depicting operation of the mobile station 10 of Fig. 2 when managing profile policy change instructions CI and change commands CC.

The operation starts with a terminal 20 and secure element 30 comprising the setup shown in Fig. 2. Particularly, the secure element 30 contains a second profile P2, with a profile policy identifier PPRID3 being implemented in the profile P2. The terminal 20 is a Smartphone with a touch sensitive display.

A user 50 inputs, via the touch sensitive display, as the user interface 25, of the Smartphone, as the terminal 20, a profile policy change instructions CI <CHANGE [P2; PPRID3; PPRID4]>, intending to change the currently present PPRID3 "use of profile outside home country not allowed " to in the future be PPRID4. For example, PPRID4 indicates "use of profile allowed only in country XY which is not the home country".

The TE App in the terminal 20 receives the profile policy change instructions CI <CHANGE [P2; PPRID3; PPRID4]> input by the user, and, in reaction to receipt of the CI, sends to the SEP App in the secure element 30 a profile policy change command CC <CHANGE [P2; PPRID3; PPRID4]> corresponding to the received CI.

The SEP App in the Secure Element 30 receives from the TP App the sent profile policy change command CC <CHANGE [P2; PPRID3; PPRID4]>, and, in reaction to receipt of the CC, changes the profile policy identifier from value PPRID3 to value PPRID4. According to the received policy change command CC, profile policy of the mobile station 10 is changed from PPRID3 "use of profile outside home country not allowed " to PPRID4 "use of profile allowed only in country XY which is not the home country". By this profile policy change procedure, a profile P2 which used to be a domestic profile for the home country can be changed to be a pseudo-domestic profile for one dedicated foreign country XY.

### Cited documents

[1] SGP.22, GSMA RSP Technical Specification, Version 2.2.1, 18 December 2018

## Claims

1. A mobile station (10) comprising a terminal (20) and a secure element (30; UICC, eUICC) hosted in the terminal (20),
- at least one profile (P; P1, P2, ...) implemented in the secure element (30), the profile (P; P1, P2, ...) implemented to authenticate the mobile station (20) versus a mobile radio network (40),
- the profile (P; P1, P2, ...) containing at least one profile policy identifier, PPRID, by which a profile policy is set,
**characterized by**
- an SE policy management app, SEP App, implemented in the Secure Element (30),
- a terminal device policy management app, TP App, implemented in the terminal (20),
- the TE App implemented to:
- receive, from a user (50) via a user interface (25) of the terminal (20), profile policy change instructions (CI), and
- in reaction to a received profile policy change instruction (CI), send to the SEP App a profile policy change command (CC);
- the SEP App implemented to:
- receive from the TP App profile policy change commands (CC), and
- in reaction to a received policy change command (CC), change the or a profile policy identifier, PPRID, according to the received policy change command (CC), so as to change the profile policy accordingly.

2. The mobile station (10) according to claim 1, wherein profile policy change commands (CC) are sent via a secure communication channel established between the terminal (20) and the secure element (30).

3. The mobile station (10) according to claim 2, wherein the secure communication channel is established by public key infrastructure, PKI, authentication and encryption of profile policy change commands (CC).

4. The mobile station (10) according to claim 3, wherein the public key infrastructure, PKI, comprises: a TP App private key and a corresponding TP App public key, and a SEP App private key and a corresponding SEP App public key.

5. The mobile station (10) according to claim 4, wherein the TP App private key comprises a random key portion and a terminal specific key portion, wherein the terminal specific key portion comprises one or several of the following elements: a device identifier EID of the terminal, an International Mobile Equipment Identity IMEI of the terminal.

6. The mobile station (10) according to any of claims 2 to 5, wherein the terminal (20) comprises a chipset, and wherein the terminal (20) is implemented with a trusted execution environment, TEE, in the chipset of the terminal (20), and wherein the terminal device policy management app, TP App, - or at least a security relevant portion of the TP App - is implemented in the trusted execution environment, TEE, of the terminal (20), and wherein the secure communication channel is established between the trusted execution environment, TEE, and the secure element (30).

7. The mobile station (10) according to any of claims 1 to 6, wherein the terminal (20) further comprises a terminal management client, allowing amendments to the TP App or/and to the SEP App via amendment commands received at the terminal (20) or at the secure element (30) via the mobile radio network (40).

8. The mobile station (10) according to claim 7 in combination with claim 6, wherein the terminal management client is implemented in the trusted execution environment, TEE.

9. The mobile station (10) according to any of claims 1 to 8, wherein the terminal (20) and the secure element (30) are further implemented with a terminal profile policy certificate infrastructure, wherein, with a profile change command (CC) sent for the TP App to the SEP App, a profile policy certificate is sent from the TP App to the SEP APP and verified in the SEP APP, and the step in the secure element (30) of changing the profile policy identifier, PPRID, according to the received policy change command (CC), so as to change the profile policy accordingly, is executed upon successful verification of the certificate, and not executed upon failed verification of the certificate.

10. The mobile station (10) according to any of claims 1 to 9, wherein the profile policy change command (CC) is a SIM Toolkit Command STK.

11. The mobile station (10) according to any of claims 1 to 10, wherein the profile policy change command (CC) or/and the profile policy change instruction (CI) is or are parametrized with following parameters:
- a profile identifier of a profile (P) for which the profile policy change command (CC) or/and the profile policy change instruction (CI) is intended;
- at least one profile policy identifier, PPRID, related for said profile (P).

12. The mobile station (10) according to claim 11, wherein the parameter of the at least one profile policy identifier, PPRID, for a profile (P2) comprises a first profile policy identifier, PPRID (PPRID3), designating a profile policy identifier, PPRID (PPRID3) to be removed from the profile (P2) and a second profile policy identifier, PPRID (PPRID4) to be implemented to the profile (P2).
